# EUROPEAN PATENT APPLICATION

(11) **EP 4 400 378 A1**
(43) Date of publication of application: **17.07.2024**
(21) Application number: 21957028.0
(22) Date of filing: 15.09.2021
(51) Int. Cl.: B60W 30/06

(54) **AUTOMATIC PARKING METHOD AND APPARATUS**

(71) Applicant: Huawei Technologies Co., Ltd., Shenzhen, Guangdong 518129 (CN)
(72) Inventor: LI, Qiang, Shenzhen, Guangdong 518129 (CN)
(74) Representative: Maiwald GmbH
(86) International application number: PCT/CN2021/118396
(87) International publication number: WO 2023/039737

(57) **Abstract**

This application provides an automatic parking method and apparatus. The method includes: determining a target parking space as a narrow parking space, where the narrow parking space includes a parking space in which a width of the target parking space is less than a width of a standard parking space, and/or a length of the target parking space is less than a length of the standard parking space; and controlling, based on the narrow parking space, a vehicle to be parked in or pull out of the target parking space. According to the automatic parking method in this application, the narrow parking space can be identified, a user is prompted that the parking space is the narrow parking space, and the user is prompted, based on a narrow parking space identification result, in advance to park the vehicle by using a mobile terminal, thereby helping improve user experience during automatic parking.

## Description

### TECHNICAL FIELD

This application relates to the field of intelligent driving, and in particular, to an automatic parking method and apparatus.

### BACKGROUND

Currently, an intelligent vehicle is usually equipped with an automatic parking system, to help a user implement automatic parking. However, when a vehicle is parked in or pulls out of a parking space narrower than a standard parking space by using an existing automatic parking system, a process of the automatic parking in the narrower parking space is the same as a process of automatic parking in the standard parking space. In other words, when the vehicle performs parking space identification, whether a target parking space is a narrow parking space cannot be predicted. As a result, before the vehicle is parked in or pulls out of the target parking space, a user cannot predict whether the user can normally get on or off the vehicle. For example, after the vehicle is parked in the target parking space, the user finds that the parking space is too narrow to allow the user to normally get off the vehicle, so the user needs to first pull the vehicle out of the parking space, and then the user gets off the vehicle and controls the vehicle to be parked in the parking space by using a mobile terminal; or after arriving at the vehicle, the user finds that the user cannot normally get on the vehicle, so the user controls the vehicle to pull out of the parking space by using a mobile terminal.

It can be learned that, because a narrow parking space cannot be predicted by using a current automatic parking method, the user cannot be prompted in advance to park the vehicle in and pull out of the parking space by using the mobile terminal. In addition, a targeted parking policy for parking in or pulling out of a narrow parking space does not exist in the existing parking system, resulting in poor user experience.

Therefore, how to provide an automatic parking method in which a parking space narrower than a standard parking space is identified and a user can be prompted in advance, based on an identification result, to park the vehicle by using a mobile terminal becomes an urgent problem to be resolved.

### SUMMARY

This application provides an automatic parking method and apparatus, to identify a narrow parking space, prompt a user that a parking space is the narrow parking space, and remind the user in advance, based on an identification result of the narrow parking space, to park a vehicle by using a mobile terminal, thereby helping improve user experience during automatic parking.

According to a first aspect, an automatic parking method is provided. The method may be performed by a vehicle. The method includes: determining a target parking space as a narrow parking space, where the narrow parking space includes a parking space in which a width of the target parking space is less than a width of a standard parking space, and/or a length of the target parking space is less than a length of the standard parking space; and controlling, based on the narrow parking space, a vehicle to be parked in or pull out of the target parking space.

According to the automatic parking method provided in this embodiment of this application, the target parking space is determined as the narrow parking space, so that a parking policy different from that of the standard parking space can be performed. For example, the user is prompted in advance to park the vehicle by using the mobile terminal, or the location of the vehicle after parking in the narrow parking space is determined in advance, thereby improving user experience during automatic parking.

With reference to the first aspect, in some implementations of the first aspect, the method further includes: determining that a difference between the width of the target parking space and a width of the vehicle is less than or equal to a second threshold.

Optionally, only the width of the target parking space may be compared with the width of the vehicle, and when the difference between the width of the target parking space and the width of the vehicle is less than or equal to the second threshold, the target parking space is determined as the narrow parking space. It should be understood that, the second threshold is a positive integer.

With reference to the first aspect, in some implementations of the first aspect, the method further includes: prompting a user to park the vehicle by using a mobile terminal; and the controlling, based on the narrow parking space, a vehicle to be parked in or pull out of the target parking space includes: making a response to a received first instruction sent by the mobile terminal.

Optionally, the first instruction may be an automatic parking instruction sent by the mobile terminal, or the first instruction may be an instruction sent by the mobile terminal for controlling the vehicle to move.

According to the automatic parking method provided in this embodiment of this application, after the target parking space is determined as the narrow parking space, the user may be prompted in advance to control the vehicle to be parked in or pull out by using the mobile terminal. The user may choose to perform automatic parking in the narrow parking space by using the mobile terminal, to overcome a problem that the user has difficulty in parking when the target parking space is the narrow parking space, thereby improving user experience.

With reference to the first aspect, in some implementations of the first aspect, the method further includes: before the prompting a user to park the vehicle by using a mobile terminal, determining a first distance based on a width of the narrow parking space and the width of the vehicle; and determining that the first distance is less than or equal to a third threshold, where the first distance is a distance between an exterior contour on a first side of the vehicle and an obstacle that is on the first side of the vehicle after the vehicle is parked in the target parking space.

Optionally, the first side of the vehicle may be a driver side of the vehicle.

According to the automatic parking method provided in this embodiment of this application, when the distance between the driver side and the obstacle is excessively small, and the user cannot normally get on or off the vehicle after a vehicle door is opened, the user may be prompted in advance to park the vehicle by using the mobile terminal. This can effectively avoid a case in which the user finds that the user cannot get off the vehicle after parking the vehicle in the target parking space. Alternatively, when the target parking space is excessively narrow, and the user cannot get on the vehicle to pull the vehicle out, the user does not need to arrive at the vehicle, but may control the vehicle to automatically pull out by using the mobile terminal when the user is far away from the vehicle, to help save time and improve user experience.

With reference to the first aspect, in some implementations of the first aspect, the method further includes: before the determining a first distance based on a width of the narrow parking space and the width of the vehicle, determining that a second distance is greater than or equal to a fourth threshold and the first distance is greater than or equal to the second distance, where the second distance is a distance between an exterior contour on a second side of the vehicle and an obstacle that is on the second side of the vehicle after the vehicle is parked in the target parking space.

Optionally, the second side of the vehicle may be a front passenger side of the vehicle.

According to the automatic parking method provided in this embodiment of this application, a specific distance is reserved on the front passenger side, to ensure a safe distance between the front passenger side and the obstacle, thereby preventing a scratch during parking and improving user experience.

With reference to the first aspect, in some implementations of the first aspect, the method further includes: prompting the user that the target parking space is the narrow parking space.

According to the automatic parking method provided in this embodiment of this application, the narrow parking space and the standard parking space may be differently displayed on an in-vehicle screen, to prompt the user which parking space is a narrow parking space. Alternatively, after the user selects the target parking space, the user is prompted, on the in-vehicle screen, on a screen of the mobile terminal, by using a voice message, or the like, that the target parking space is the narrow parking space. In this way, the user selects a proper way of parking in the narrow parking space, thereby improving user experience.

With reference to the first aspect, in some implementations of the first aspect, the method further includes: during parking, when a third distance between a first location of an exterior contour of the vehicle and a first obstacle or a parking space line of the target parking space is less than or equal to a fifth threshold, displaying information about the third distance, and/or a partial enlarged view of the first location and the first obstacle or the parking space line.

According to the automatic parking method provided in this embodiment of this application, when a distance between any position of the exterior contour of the vehicle and the parking space line of the target parking space or the obstacle around the target parking space is excessively small, specific distance information is displayed, to prompt the user to adjust a parking direction. During the parking, the partial enlarged view in which the vehicle is away from an edge of the narrow parking space and the obstacle is displayed, so that the user can perceive an actual situation in real time and adjust the parking direction, thereby improving user experience.

With reference to the first aspect, in some implementations of the first aspect, the method further includes: when there is the obstacle on the second side of the vehicle, prompting a user on the second side of the vehicle to get off the vehicle in advance.

When the vehicle is prepared to be parked in the target parking space, and there is the obstacle on the front passenger side of the vehicle, all users on the front passenger side are prompted to get off the vehicle in advance, to prevent a case in which the users on the front passenger side cannot get off the vehicle only after the vehicle is parked in the parking space, thereby improving user experience.

With reference to the first aspect, in some implementations of the first aspect, the method further includes: determining the target parking space as the narrow parking space based on a parking record of the vehicle.

According to a second aspect, an automatic parking apparatus is provided. The apparatus includes: a determining unit, configured to determine a target parking space as a narrow parking space, where the narrow parking space includes a parking space in which a width of the target parking space is less than a width of a standard parking space, and/or a length of the target parking space is less than a length of the standard parking space; and a processing unit, configured to control, based on the narrow parking space, a vehicle to be parked in or pull out of the target parking space.

With reference to the second aspect, in some implementations of the second aspect, the determining unit is further configured to determine that a difference between the width of the target parking space and a width of the vehicle is less than or equal to a second threshold.

With reference to the second aspect, in some implementations of the second aspect, the processing unit is further configured to prompt a user to park the vehicle by using a mobile terminal; and that the processing unit controls, based on the narrow parking space, the vehicle to be parked in or pull out of the target parking space includes: making a response to a received first instruction sent by the mobile terminal.

With reference to the second aspect, in some implementations of the second aspect, the determining unit is further configured to: before the processing unit prompts the user to park the vehicle by using the mobile terminal, determine a first distance based on a width of the narrow parking space and the width of the vehicle; and determine that the first distance is less than or equal to a third threshold, where the first distance is a distance between an exterior contour on a first side of the vehicle and an obstacle that is on the first side of the vehicle after the vehicle is parked in the target parking space.

With reference to the second aspect, in some implementations of the second aspect, the determining unit is further configured to: before the determining unit determines the first distance based on the width of the narrow parking space and the width of the vehicle, determine that a second distance is greater than or equal to a fourth threshold and the first distance is greater than or equal to the second distance, where the second distance is a distance between an exterior contour on a second side of the vehicle and an obstacle that is on the second side of the vehicle after the vehicle is parked in the target parking space.

With reference to the second aspect, in some implementations of the second aspect, the processing unit is further configured to prompt the user that the target parking space is the narrow parking space.

With reference to the second aspect, in some implementations of the second aspect, the processing unit is further configured to: during parking, when a third distance between a first location of an exterior contour of the vehicle and a first obstacle or a parking space line of the target parking space is less than or equal to a fifth threshold, display information about the third distance, and/or a partial enlarged view of the first location and the first obstacle or the parking space line.

With reference to the second aspect, in some implementations of the second aspect, the processing unit is further configured to: before the processing unit controls, based on the narrow parking space, the vehicle to be parked in or pull out of the target parking space, when there is the obstacle on the second side of the vehicle, prompt a user on the second side of the vehicle to get off the vehicle in advance.

With reference to the second aspect, in some implementations of the second aspect, the determining unit is further configured to determine the target parking space as the narrow parking space based on a parking record of the vehicle.

According to a third aspect, an automatic parking apparatus is provided. The apparatus includes: a memory, configured to store a program; and a processor, configured to execute the program stored in the memory. When the program stored in the memory is executed, the processor is configured to perform the method according to the first aspect.

According to a fourth aspect, an automatic driving vehicle is provided, and the automatic driving vehicle includes the apparatus according to the second aspect.

According to a fifth aspect, a computer program product is provided. The computer program product includes computer program code. When the computer program code is run on a computer, the computer is enabled to perform the method according to the first aspect.

It should be noted that some or all of the computer program code may be stored in a first storage medium. The first storage medium may be encapsulated together with a processor, or may be encapsulated separately from a processor. This is not specifically limited in this embodiment of this application.

According to a sixth aspect, a computer-readable medium is provided. The computer-readable medium stores program code. When the computer program code is run on a computer, the computer is enabled to perform the method according to the first aspect.

According to a seventh aspect, a chip system is provided. The chip system includes a processor, configured to invoke a computer program or a computer instruction stored in a memory, so that the processor performs the method according to any one of the foregoing aspects and the possible implementations of the foregoing aspects.

With reference to the seventh aspect, in a possible implementation, the processor is coupled to the memory through an interface.

With reference to the seventh aspect, in a possible implementation, the chip system further includes the memory, and the memory stores the computer program or the computer instruction.

### BRIEF DESCRIPTION OF DRAWINGS

FIG. 1 is an application scenario of an automatic parking method according to an embodiment of this application;
FIG. 2 is a schematic diagram of a system architecture in which an automatic parking method is used according to an embodiment of this application;
FIG. 3 is a schematic diagram of determining a narrow parking space in an automatic parking method according to an embodiment of this application;
FIG. 4A and FIG. 4B are a schematic diagram of displaying a parking space in an automatic parking method according to an embodiment of this application;
FIG. 5 is a schematic diagram of a parking policy in an automatic parking method according to an embodiment of this application;
FIG. 6 is a schematic diagram of a parking policy in an automatic parking method according to an embodiment of this application;
FIG. 7A and FIG. 7B are a schematic diagram of a parking prompt in an automatic parking method according to an embodiment of this application;
FIG. 8A to FIG. 8C are a schematic diagram of a parking prompt in an automatic parking method according to an embodiment of this application;
FIG. 9(a) to FIG. 9(d) are a schematic diagram of a parking prompt in an automatic parking method according to an embodiment of this application;
FIG. 10A and FIG. 10B are a schematic diagram of a parking prompt in an automatic parking method according to an embodiment of this application;
FIG. 11 is a schematic flowchart of an automatic parking method according to an embodiment of this application;
FIG. 12 is a schematic flowchart of an automatic parking method according to an embodiment of this application;
FIG. 13 is a schematic flowchart of an automatic parking method according to an embodiment of this application;
FIG. 14 is a schematic flowchart of an automatic parking method according to an embodiment of this application;
FIG. 15 is a schematic block diagram of an automatic parking apparatus according to an embodiment of this application; and
FIG. 16 is a schematic block diagram of an automatic parking apparatus according to an embodiment of this application.

### DESCRIPTION OF EMBODIMENTS

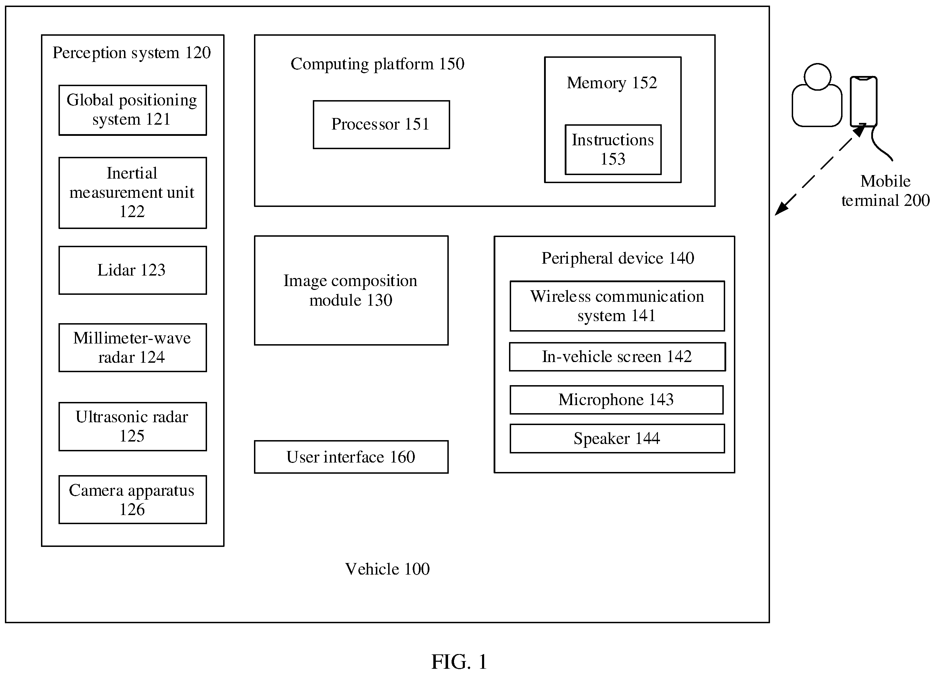

The following describes technical solutions of this application with reference to accompanying drawings. To facilitate understanding, a scenario to which embodiments of this application are applicable is described below with reference to FIG. 1 by using an intelligent driving scenario as an example.

FIG. 1 is an application scenario of an automatic parking method according to an embodiment of this application. In the application scenario, a vehicle 100 and a mobile terminal 200 may be included.

In a possible implementation, the vehicle 100 may be configured to be in a fully or partially automatic driving mode. For example, the vehicle 100 may obtain information about a surrounding environment of the vehicle 100 by using a perception system 120, and obtain an automatic driving policy based on an analysis on the information about the surrounding environment, to implement fully automatic driving, or present an analysis result to a user, to implement partially automatic driving. The vehicle 100 is configured to be in a fully or partially automatic driving mode. The vehicle 100 may alternatively be controlled by using the mobile terminal 200, and the vehicle 100 and the mobile terminal 200 may be interconnected by using a wireless communication system.

The perception system 120 may include several types of sensors that perceive the information about the surrounding environment of the vehicle 100. For example, the perception system 120 may include one or more of a global positioning system 121 (where the global positioning system may be a GPS system, a BeiDou system, or another positioning system), an inertia measurement unit (inertial measurement unit, IMU) 122, a lidar 123, a millimeter-wave radar 124, an ultrasonic radar 125, and a camera apparatus 126.

The vehicle 100 may include an image composition module 130. The image composition module 130 may draw a map for an environment by using technologies such as an object recognition algorithm, a structure from motion (structure from motion, SFM) algorithm, video tracking, or simultaneous localization and mapping (simultaneous localization and mapping, SLAM).

The vehicle 100 interacts with a mobile terminal, an external sensor, another vehicle, another computer system, or a user by using a peripheral device 140. The peripheral device 140 may include a wireless communication system 141, an in-vehicle screen 142, a microphone 143, and/or a speaker 144.

In some possible implementations, the peripheral device 140 enables interaction between a user of the vehicle 100 and a user interface 160. For example, the in-vehicle screen 142 may provide information for the user of the vehicle 100. The user interface 160 may receive an input from the user by the user further operating the in-vehicle screen 142. The in-vehicle screen 142 may be operated by using a touchscreen. In another case, the peripheral device 140 may provide a means for the vehicle 100 to communicate with another device located in the vehicle. For example, the microphone 143 may receive an audio message (for example, a voice command or another audio input) from the user of the vehicle 100. Similarly, the speaker 144 may output the audio message to the user of the vehicle 100.

Some or all functions of the vehicle 100 are controlled by a computing platform 150. The computing platform 150 may include at least one processor 151, and the processor 151 may execute instructions 153 stored in a non-transitory computer-readable medium, for example, a memory 152. In some embodiments, the computing platform 150 may alternatively be a plurality of computing devices that control an individual component or a subsystem of the vehicle 100 in a distributed manner.

The processor 151 may be any conventional processor, for example, a central processing unit (central processing unit, CPU). Alternatively, the processor 151 may further include a graphics processing unit (graphics process unit, GPU), a field-programmable gate array (field-programmable gate array, FPGA), a system on a chip (system on a chip, SOC), an application-specific integrated chip (application-specific integrated circuit, ASIC), or a combination thereof.

In addition to the instructions 153, the memory 152 may further store data, such as a road map, route information, a location, a direction, and a speed of the vehicle, and other vehicle data. The data may be used by the vehicle 100 and the computing platform 150 during operation of the vehicle 100 in an autonomous mode, a semi-autonomous mode, and/or a manual mode.

The computing platform 150 may control a function of the vehicle 100 based on inputs received from various subsystems (for example, the perception system 120 and the image composition module 130). For example, the computing platform 150 may perform automatic parking by using location information of the vehicle determined by the global positioning system 121 in the perception system 120 and map information of an internal road drawn by the image composition module 130.

Optionally, one or more of the foregoing components may be installed separately from or associated with the vehicle 100. For example, the memory 152 may be partially or completely separated from the vehicle 100. The foregoing components may be communicatively coupled together in a wired and/or wireless manner.

Optionally, the foregoing component is merely an example. In an actual application, components in the foregoing modules may be added or removed according to an actual requirement. FIG. 1 should not be construed as a limitation on this embodiment of this application.

The vehicle 100 may include an advanced driver assistance system (advanced driving assistant system, ADAS). The ADAS obtains the information about the surrounding environment of the vehicle by using a plurality of sensors on the vehicle (including but not limited to: the lidar, the millimeter-wave radar, the camera apparatus, the ultrasonic sensor, the global positioning system, and the inertia measurement unit), and analyzes and processes the obtained information, to implement functions such as obstacle perception, target recognition, vehicle positioning, path planning, and driver monitoring/reminder. In this way, driving safety, automation, and comfort of the vehicle are improved.

Optionally, the vehicle 100 may include one or more different types of transport vehicles, or may include one or more different types of transport vehicles or movable objects that are operated or moved on land (for example, a highway, a road, or a railway), on water (for example, a waterway, a river, or an ocean), or in space. For example, the vehicle may include a car, a bicycle, a motorcycle, a train, a subway, an airplane, a ship, an aircraft, a robot, or another type of transport vehicle or a movable object. This is not limited in this embodiment of this application.

Optionally, the mobile terminal 200 may include various hand-held devices, wearable devices, computing devices that have a wireless communication function, or other processing devices connected to a wireless modem, and terminals in various forms, such as a mobile station (mobile station, MS), a terminal (terminal), user equipment (user equipment, UE), and a soft client. For example, the mobile terminal may be a water meter, an electricity meter, or a sensor. This is not limited in this embodiment.

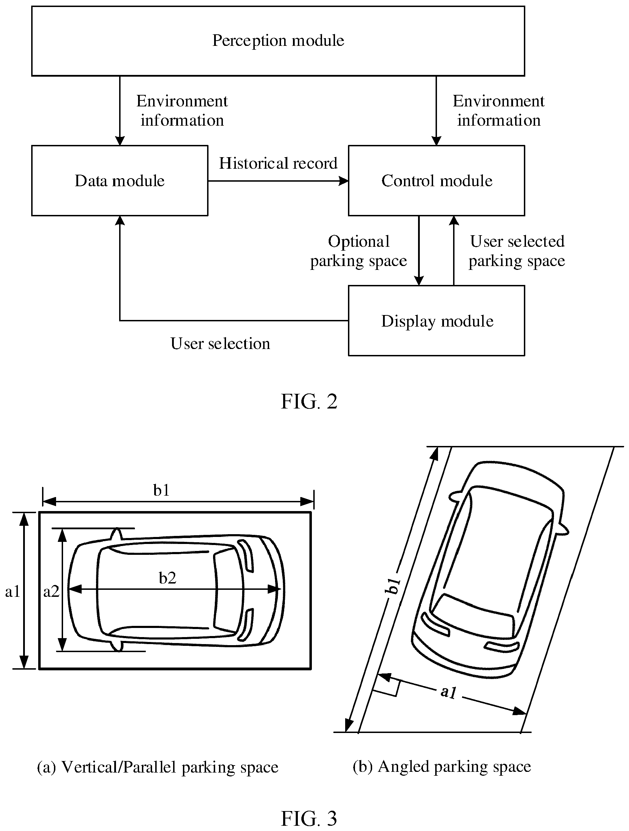

FIG. 2 is a schematic diagram of a system architecture in which an automatic parking method is used according to an embodiment of this application. As shown in FIG. 2, the system includes a perception module, a data module, a control module, and a display module. The system shown in FIG. 2 may be used in a scenario in which automatic parking of an intelligent driving vehicle and the like is supported.

The perception module may be one or more of a plurality of sensors included in the perception system 120 in FIG. 1, and may specifically include the global positioning system 121, the IMU 122, the lidar 123, the millimeter-wave radar 124, the ultrasonic radar 125, the camera apparatus 126, and the like. The perception module obtains environment information of a current parking space. The environment information includes a static or dynamic obstacle around the parking space, a passable area, a lane line, a type of the parking space, an opening direction of the parking space, and the like. The type of the parking space includes a vertical parking space, a parallel parking space, an angled parking space, and the like. The perception module may further obtain an orientation of the vehicle relative to the current parking space. The data module and the control module may be one or more modules of the computing platform 150 in FIG. 1, and the display module may be the in-vehicle device 142 in FIG. 1.

The perception module inputs the obtained environment information into the data module and the control module. The data module analyzes the environment information, determines a size of the parking space based on the data obtained by the perception module, compares the size with a size of a standard parking space, classifies the parking space into a standard parking space and a narrow parking space, and inputs an analysis result to the control module.

The control module displays the analysis result of the data module on the display module, for example, a human-machine interface (human-machine interface, HMI). The display module includes an interface that can interact with a user, for example, a display and a central control screen inside the vehicle. The user can select a target parking space from the displayed available parking spaces.

When the vehicle is prepared to be parked in the target parking space, the data module analyzes the environment information, and calculates distances between an inner boundary of a parking space line or an obstacle and left and right exterior contours of the vehicle in a direction perpendicular to a vertical symmetric plane of the vehicle when the vehicle is parked in the middle of the target parking space. When the vehicle is prepared to pull out of the target parking space, the data module analyzes the environment information, and calculates a distance between an exterior contour of a driver side of the current vehicle and an obstacle.

The data module calculates the distances between the left and right exterior contours of the vehicle and the inner boundary of the parking space line, and the control module adjusts, with reference to the environment information obtained by the perception module and the data module, the distances between the exterior contours and the inner boundary of the parking space line, and formulates a corresponding parking in policy. Alternatively, the data module inputs the distance between the exterior contour of the driver side of the vehicle and the obstacle into the control module, and the control module formulates a pulling out policy with reference to the environment information obtained by the perception module and the data module.

The control module sends the formulated parking in policy or the pulling out policy to the display module, the display module displays the policy on a human-machine interface (human-machine interface, HMI) or the like, and the control module parks the vehicle in the target parking space or pulls the vehicle out of the current parking space according to a selection of the user.

As described above, a narrow parking space cannot be predicted by using a current automatic parking method, and a user cannot be prompted in advance to park a vehicle by using a mobile terminal. In addition, a targeted parking policy for parking in or pulling out of a narrow parking space does not exist in the existing parking system, resulting in poor user experience.

In view of this, embodiments of this application provide an automatic parking method and apparatus. Based on identification and determining of a parking space, a target parking space can be determined as a narrow parking space in advance, and different parking policies can be formulated according to a size of the narrow parking space, for example, one or more of a pre-parking position, a parking in direction, a pulling out direction, and a prompting manner. When the target parking space is excessively narrow and it is inconvenient for the user to get off the vehicle after parking, the vehicle and/or the mobile terminal prompt/prompts the user to control automatic parking by using the mobile terminal, so that a case in which the user finds that the user cannot get off the vehicle after parking in the target parking space can be effectively avoided. Alternatively, when the target parking space is excessively narrow, and the user cannot get on the vehicle to pull the vehicle out, the user does not need to arrive at the vehicle, but may control the vehicle to automatically pull out by using the mobile terminal when the user is far away from the vehicle, to help save time and improve user experience.

FIG. 3 is a schematic diagram of determining a narrow parking space in an automatic parking method according to an embodiment of this application.

Specifically, in a process in which the vehicle marches and searches for the target parking space to be parked in, images of ground parking spaces are recognized by using a camera. Types of the parking spaces are determined based on the images of the parking spaces, and sizes of the parking spaces are compared with a size of a standard parking space and an exterior contour size of the vehicle. The types of the parking spaces are used to determine whether the identified parking spaces are narrow parking spaces. As shown in (a) in FIG. 3, a1 and b1 are respectively a width and a length of the target parking space, and a2 and b2 are respectively a width and a length of a vehicle, where a1 and b1 are respectively distances between central axes of two parking space lines. The width of the vehicle is a distance that is parallel to a vertical symmetric plane of the vehicle, and that is between two planes of protruding parts (including a rear view mirror, a measurement sign light, a turn signal, a flexible fender, and deformation of a contact part between a tire and the ground) on both sides of the vehicle. The length of the vehicle is a distance that is perpendicular to a vertical symmetric plane of the vehicle, and that is between two planes of protruding parts (including a rear view mirror, a measurement sign light, a turn signal, a flexible fender, and deformation of a contact part between a tire and the ground) on both sides of the vehicle. In other words, the width and the length are respectively a size of the widest part and a size of the longest part on the vehicle. When a1 - a2 ≥ A1 and a1 < A, and/or b1 - b2 ≥ B1 and b1 < B, the target parking space is determined as a narrow parking space. A1 and B1 are minimum safe distances that are used to ensure that the vehicle does not scratch a surrounding obstacle during the parking, and may be set based on a vehicle model and a type of the target parking space. A and B denote a width and a length of the standard parking space respectively. It should be understood that, for an angled parking space, a width b2 of the angled parking space is calculated according to a vertical distance of an angled line, as shown in (b) in FIG. 3. A small-sized vehicle with a total length of 5,000 mm and a total width of 2,000 mm is used as an example below to describe specific setting rules of A1 and B1. Rule 1: When the type of the target parking space is a vertical parking space or an angled parking space, A1 may be set to 300 mm, and B1 may be set to any value greater than 1,000 mm. Rule 2: When the type of the target parking space is a parallel parking space, A1 may be set to any value greater than 500 mm, and B1 may be set to 1,000 mm. Rule 3: Alternatively, regardless of the type of the target parking space, A1 is set to 300 mm, and B1 is set to 1,000 mm. It should be understood that according to the rule 1, for the vertical parking space or the angled parking space, because a size in a length direction of the parking space has relatively small impact on parking safety during the parking, only a size in a width direction of the parking space may be considered; and according to the rule 2, for the parallel parking space, because a size in a width direction of the parking space has relatively small impact on parking safety during the parking, only a size in a length direction of the parking space may be considered. For a vehicle with a larger exterior contour size, A1 and B1 may be set to other values based on different vehicle models. This is not limited in this embodiment of this application.

In a possible implementation, when there is no image of a parking space on the ground, or the camera of the vehicle cannot recognize an image of a ground parking space because the image of the parking space is unclear, the camera obtains information about a surrounding environment, and determines, based on the information about the surrounding environment, whether there is a parking space. After the parking space is identified, two static vehicles on both sides of the parking space are identified, a distance a between the two static vehicles is calculated, and the distance is compared with the size of the standard parking space and A1 or B1. It should be understood that, in this case, the vehicle may determine, based on a parking direction of another vehicle that is identified, whether the parking space is a vertical parking space, a parallel parking space, or an angled parking space. In this case, the vehicle may determine one of the length and the width of the parking space based on a distance between two adjacent static vehicles, but cannot determine the other of the length or the width of the parking space. Therefore, if the target parking space is a vertical parking space or an angled parking space, the target parking space may be determined as the narrow parking space only if a - a2 ≥ A1 and a < A; or if the target parking space is a parallel parking space, the target parking space may be determined as the narrow parking space only if a - b2 ≥ B1 and a < B.

In a possible implementation, after the parking space is identified, the vehicle determines a width a1 and/or a length b1 of the target parking space based on the image of the ground parking space, and determines the target parking space as the narrow parking space when a1 < A and/or b1 < B; or the vehicle determines a distance a between two static vehicles on both sides of the parking space, and determines that the target parking space is a narrow parking space when a < A and/or a < B.

In a possible implementation, after the parking space is identified, the vehicle determines a width a1 of the target parking space based on the image of the ground parking space, and determines the target parking space as the narrow parking space when a1 - a2 ≤ A1'; or the vehicle determines a distance a between two static vehicles on both sides of the parking space, and determines the target parking space as the narrow parking space when a - a2 ≤ A1'. It should be understood that, A1' is a positive integer. Specifically, A1' may be a sum of minimum distances between an exterior contour of a protruding part of a driver side or a front passenger side of the vehicle and an obstacle when users on the driver side and the front passenger side are allowed to get off the vehicle after vehicle doors are opened and do not scratch the obstacle. For a small-sized vehicle, A1' may be set to 600 mm. Alternatively, A1' may be a minimum distance between an exterior contour of a protruding part of the driver side of the vehicle and an obstacle when a user on the driver side is allowed to get off the vehicle after a vehicle door is opened and does not scratch the obstacle. For a small-sized vehicle, A1' may be set to 300 mm. Alternatively, A1' may be set by the user according to an actual situation, or A1' may be another value. This is not limited in this embodiment of this application.

In a possible implementation, when the vehicle is prepared to be parked in the parking space, whether the target parking space is a narrow parking space may be further determined based on a parking record of the vehicle. It should be understood that, the parking record of the vehicle includes a parking in record and a pulling out record. Specifically, the parking record may include a type, a size, a surrounding environment, and the like of the target parking space, and the parking record may further include obstacle information and other information. This is not limited in this embodiment of this application.

It should be noted that the size of the standard parking space in this embodiment of this application is a size specified in the Specifications for Setting of On-street Parking Spaces on Urban Roads (GA/T 850-2009). There are large and small standard sizes of the parking space, where a large parking space is 15,600 mm long and 3,250 mm wide, and is applicable to medium-sized and large-sized vehicles; and a small parking space is 6,000 mm long and 2,500 mm wide, and is applicable to small-sized vehicles. For an angled parking space (with an angled angle of 30°, 45°, or 60°), the angled length is 6,000 mm, the width is 2,800 mm, and the vertical distance between the two angled lines is 2,500 mm.

It should be understood that, in this embodiment of this application, if the vehicle is a small-sized vehicle, when it is determined whether the target parking space is a narrow parking space, a referred standard parking space corresponds to a small parking space; or if the vehicle is a medium-sized and large-sized vehicle, when it is determined whether the target parking space is a narrow parking space, a referred standard parking space corresponds to a large parking space.

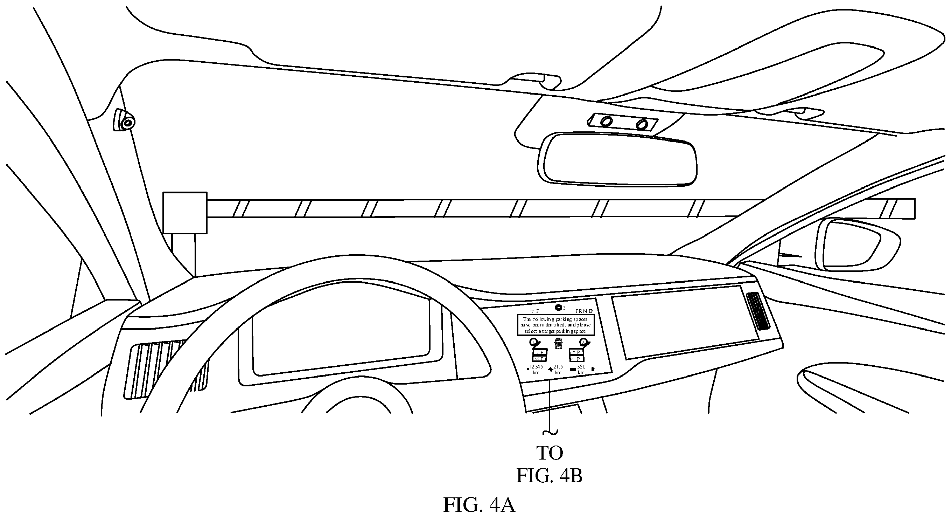

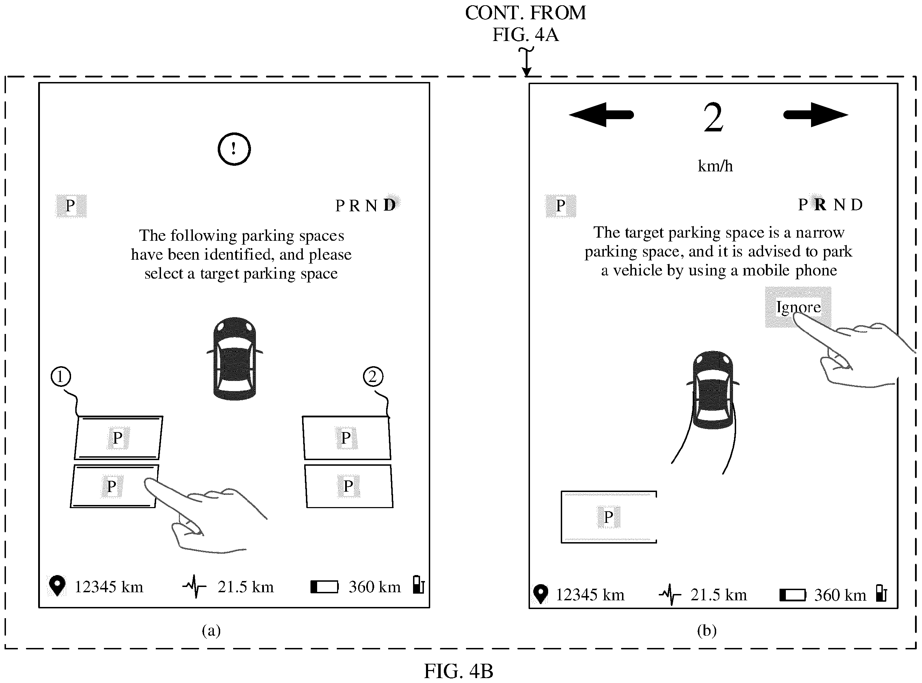

In a possible implementation, during preparation of parking, when the vehicle identifies a parking space, a plurality of parking spaces may be identified, including a standard parking space and a non-standard parking space. After it is determined, according to the method in the foregoing embodiment, that the non-standard parking space is a narrow parking space, the standard parking space and the narrow parking space are displayed on an in-vehicle screen of the vehicle, as shown in (a) in FIG. 4B. It should be understood that, when a size of the recognized non-standard parking space does not meet a standard for the foregoing narrow parking space, the parking space is not displayed. As shown in (a) in FIG. 4B, 1 and 2 are a narrow parking space and a standard parking space respectively. Two line segments are added to an outer frame of the parking space to represent the narrow parking space. The narrow parking space and the standard parking space are differently displayed, so that the parking space information is more intuitive, thereby facilitating a user to select a parking space and improving user experience. It should be understood that, the narrow parking space and the standard parking space may be differently displayed in another manner. FIG. 4A and FIG. 4B are merely an example for description. The user may select any parking space displayed on the in-vehicle screen in FIG. 4A and FIG. 4B for parking.

According to the parking space identification method, the narrow parking space determining method, and the parking space display method provided in embodiments of this application, it can be ensured that the vehicle can identify more parking spaces, including a standard parking space and a non-standard parking space, when searching for a parking space. Based on determining whether the non-standard parking space is the narrow parking space described in this embodiment of this application, a parking space that can be used for parking the vehicle is selected, and is displayed on the in-vehicle screen of the vehicle, so that more choices are provided for the user, thereby improving user experience.

In a possible implementation, the user selects the narrow parking space as the target parking space from parking spaces displayed on the in-vehicle screen of the vehicle. When the vehicle recognizes that the target parking space is the narrow parking space, the vehicle and/or a mobile terminal prompt/prompts the user to perform automatic parking by using the mobile terminal. The automatic parking in this embodiment of this application may include remote parking assist (remote parking assist, RPA), automated valet parking (auto valet parking, AVP), and the like.

In a possible implementation, after the vehicle recognizes that the target parking space is the narrow parking space, the vehicle formulates a corresponding parking policy based on a size of the target parking space, an environment around the parking space, and a size of the vehicle, so that a parking location and a parking direction of the vehicle are properly determined to facilitate a user to get off the vehicle or ensure parking safety of the vehicle.

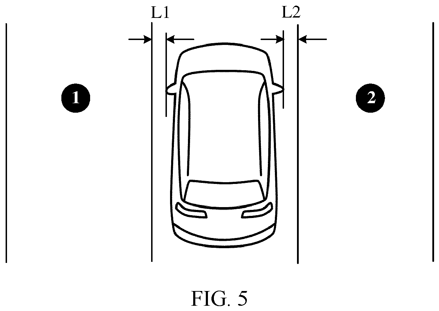

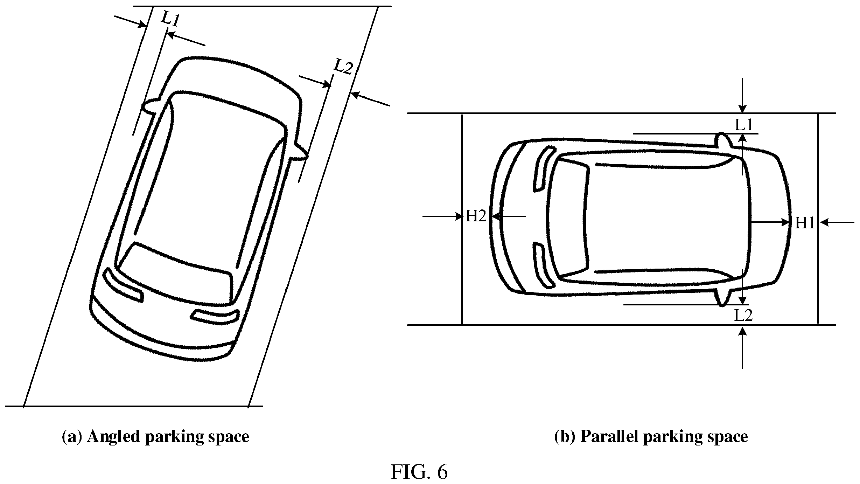

Specifically, after the user selects the narrow parking space as the target parking space according to the parking space displayed on the in-vehicle screen of the vehicle shown in (a) in FIG. 4B, a vehicle gear is switched to the "R" gear and is displayed on the in-vehicle screen, a real-time speed (for example, 2 km/h shown in (b) in FIG. 4B is displayed on the in-vehicle screen, and the user may be prompted that "the target parking space is a narrow parking space, and it is advised to park by using a mobile phone", as shown in (b) in FIG. 4B. Further, the vehicle may formulate a parking policy in advance for parking based on the size of the target parking space. With reference to FIG. 5 and FIG. 6, the following describes in detail a parking policy formulated based on a size of a narrow parking space, a surrounding environment of the parking space, and a size of a vehicle.

FIG. 5 is a schematic diagram of a parking method used in a scenario of automatically parking in a vertical parking space according to an embodiment of this application. The vertical parking space in which a vehicle is located is a narrow parking space, and L1 and L2 respectively represent distances from a left side and a right side of the vehicle to inner boundaries of parking space lines of the target parking space. When there is no image of a parking space on the ground, L1 and L2 respectively represent distances from a left side and a right side of the vehicle to left and right adjacent vehicles or obstacles.

When the parking in policy is formulated, it is first assumed that the vehicle is parked in the middle of the target parking space, and L 1 and L2 are preliminarily calculated.

It is assumed that the vehicle shown in FIG. 5 is a left-hand drive vehicle. L1 and L2 are adjusted based on the foregoing preliminarily calculated L1 and L2, so that a location at which the vehicle is located after parking in the target parking space may sequentially meet three conditions: L2 ≥ A3, L1 ≥ L2, and L1 > A2. When all the three conditions are met and there is extra room in the width of the parking space, L1 and L2 continue to be adjusted, and the extra width is preferentially allocated to L1. For example, when the extra width l = (a1 - a2) - A2 - A3 > 0,1 is allocated to L1, where a1 and a2 are widths shown in FIG. 3. When the width of the parking space cannot meet the requirement of L1 > A2, before parking, the driver is prompted to perform automatic parking by using the mobile terminal. If there is a front passenger and there is a vehicle or an obstacle on a right side of the parking space, the front passenger is prompted to get off the vehicle in advance, to facilitate parking. The following shows several parking policies in which a mobile terminal prompts a user to park a vehicle.
1. If no vehicle is parked in a parking space 2 or an area 2 is not a parking space, for example, there is a wall or another obstacle in the area 2, and a vehicle is parked in a parking space 1 or there is an obstacle in an area 1, it is determined whether L1 > A2 is true. If L1 > A2 is true, the user may select manual parking, or may select automatic parking by using the mobile terminal or the vehicle; or if L1 > A2 is not true, the user is prompted, by using the vehicle and/or the mobile terminal, to park the vehicle by using the mobile terminal.
2. If there is an obstacle in an area 1, and there is a vehicle in a parking space 2, a condition L1 > A2 is preferentially met. If the condition is not met, the user is prompted to park the vehicle by using the mobile terminal.
3. If left and right adjacent parking spaces are narrow parking spaces with vehicles parked or there are left and right obstacles, the user is prompted to park the vehicle in the middle of the parking space by using the mobile terminal.
4. When the vehicle pulls out, if there is a vehicle in a parking space 1 or an obstacle in an area 1, and L1 ≤ A2, the user is prompted to pull the vehicle out by using the mobile terminal.

It is assumed that the vehicle shown in FIG. 5 is a right-hand drive vehicle. L1 and L2 are adjusted based on the foregoing preliminarily calculated L1 and L2, so that a location at which the vehicle is located after parking in the target parking space may sequentially meet three conditions: L1 ≥ A3, L2 ≥ L1, and L2 > A2. When all the three conditions are met and there is extra room in the width of the parking space, L1 and L2 continue to be adjusted, and the extra width is preferentially allocated to L2. For example, when A4 = (a1 - a2) - A2 - A3 > 0, A4 is allocated to L2, where a1 and a2 are widths shown in FIG. 3. When the parking space is not wide enough and L2 > A2 cannot be met, before parking, the driver is prompted to perform automatic parking by using the mobile terminal. If there is a front passenger and there is a vehicle or an obstacle on a left side of the parking space, the front passenger is prompted to get off the vehicle in advance, to facilitate parking. The following shows several parking policies in which a mobile terminal prompts a user to park a vehicle.
1. If no vehicle is parked in a parking space 1, or an area 1 is not a parking space, for example, there is a wall or another obstacle in the area 1, and a vehicle is in a parking space 2 or there is an obstacle in an area 2, it is determined whether L2 > A2 is true. If L2 > A2 is not true, the user is prompted, by using the vehicle and/or the mobile terminal, to park the vehicle by using the mobile terminal.
2. If there is an obstacle in an area 2, and there is a vehicle in a parking space 1, a condition L2 > A2 is preferentially met. If the condition is not met, the user is prompted to park in or pull out of the parking space by using the mobile terminal.
3. If left and right adjacent parking spaces are narrow parking spaces with vehicles parked or there are left and right obstacles, the user is prompted to park the vehicle in the middle of the parking space by using the mobile terminal.
4. When the vehicle pulls out, if there is a vehicle in a parking space 2 or an obstacle in an area 2, and L2 ≤ A2, the user is prompted to pull the vehicle out by using the mobile terminal.

It should be noted that A2 is a minimum distance between an exterior contour of a protruding part of a driver side of the vehicle and an obstacle when a user on the driver side is allowed to get off the vehicle after a vehicle door is opened and does not scratch the obstacle. For a small-sized vehicle, A2 may be set to 300 mm. Alternatively, A2 may be set by the user according to an actual situation. This is not limited in this embodiment of this application. A3 is a minimum safe distance for preventing the vehicle from being scratched by a vehicle in an adjacent parking space, or a minimum safe distance between the vehicle and an adjacent obstacle. Specifically, A3 may be any value greater than or equal to 0. Optionally, if a parking space is located on the front passenger side, A3 may be set to 150 mm. If no parking space is located on the front passenger side, for example, there is a wall or another obstacle in the area 2, A3 may be set to 0 mm.

It should be understood that, if the type of the narrow parking space is an angled parking space shown in (a) in FIG. 6 or a parallel parking space shown in (b) in FIG. 6, the parking policy is still applicable. It should be noted that when the target parking space is the parallel parking space, when the vehicle is parked in the target parking space, it should be further ensured that a head direction of the vehicle after the parking in the parking space is consistent with a driving direction of the vehicle, and the vehicle need to be ensured to be in the middle of the parking space, that is, the parking location needs to meet H1 = H2 in (b) in FIG. 6.

It should be noted that, for the foregoing three types of the parking spaces, when the vehicle is parked in the target parking space by using the mobile terminal, the parking direction is parking in the rear of the vehicle by default; and when automatic parking is controlled by using the vehicle, the parking direction is preferentially parking in the rear of the vehicle. For the angled parking space, before parking, the user needs to be notified that the target parking space is an angled parking space, and it is advised to park the vehicle by using the mobile terminal.

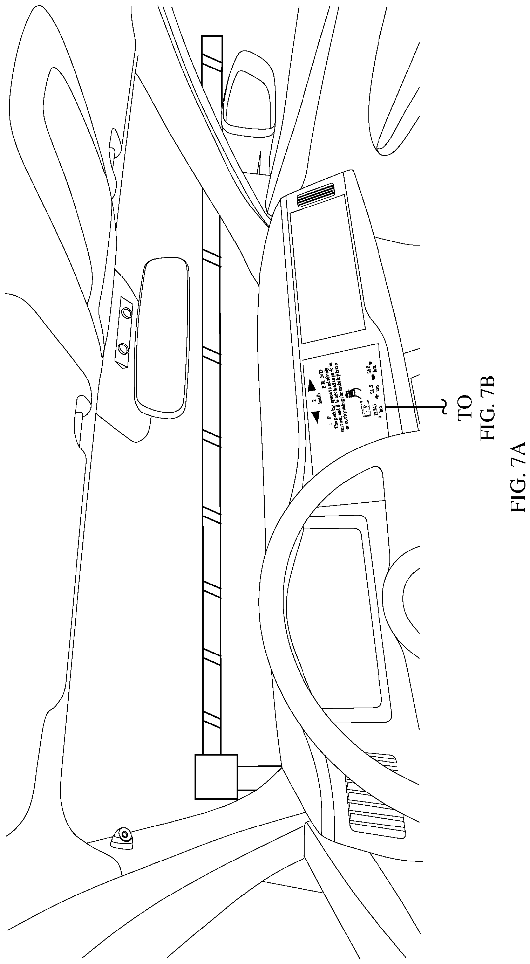

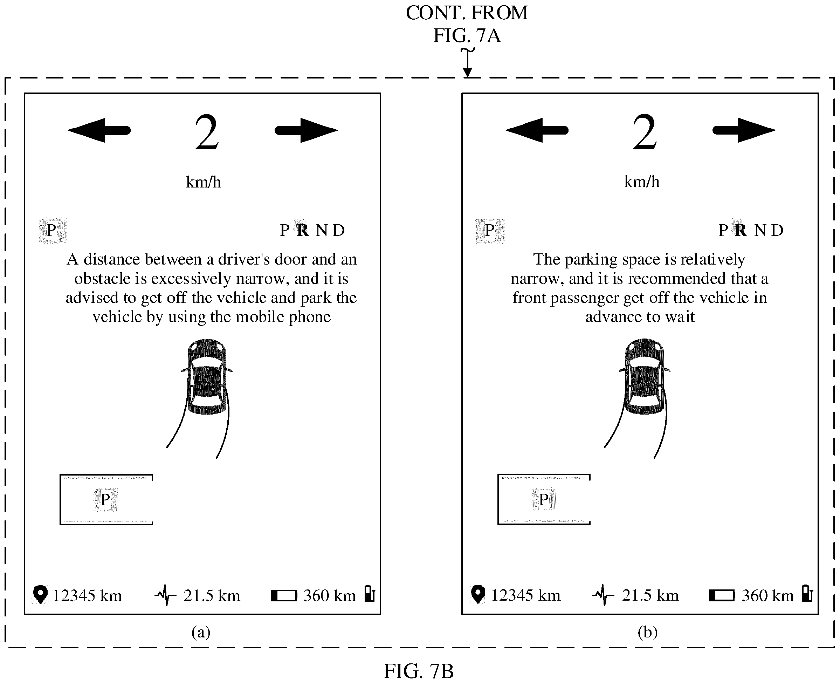

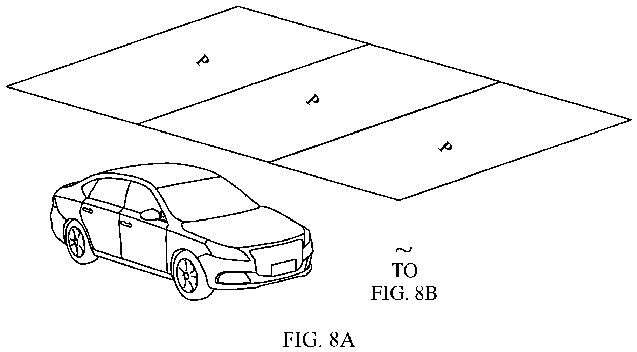

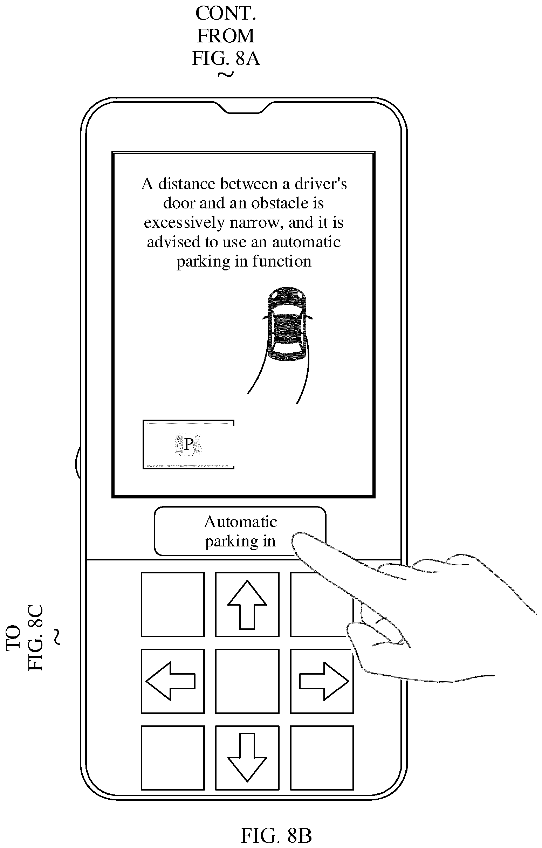

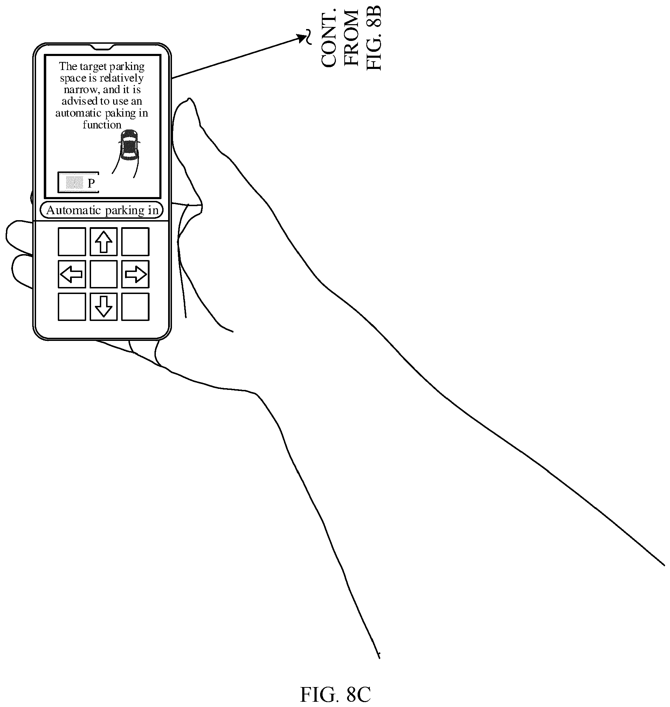

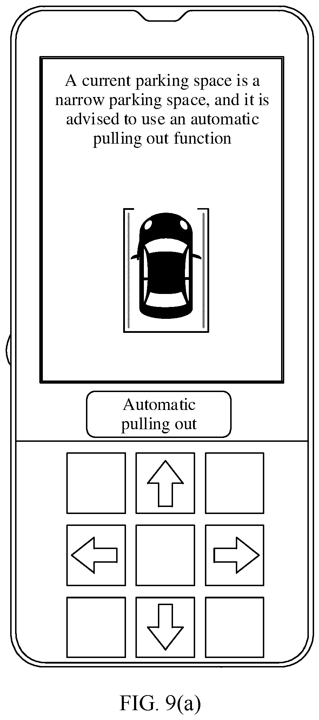

In a possible implementation, when a distance between a door of the driver side and the obstacle is less than or equal to A2, and/or there is an obstacle on the front passenger side, the user may get off the vehicle in advance according to a prompt on the in-vehicle screen of the vehicle and park the vehicle by using the mobile terminal, as shown in FIG. 7A and FIG. 7B. Specifically, when the vehicle is parked in, a prompt that reads "the distance between the driver's door and the obstacle is excessively narrow, and it is advised to get off the vehicle and park the vehicle by using the mobile phone" is displayed on the in-vehicle screen of the vehicle, as shown in (a) in FIG. 7B. Optionally, as shown in FIG. 8A to FIG. 8C and FIG. 9(a) to FIG. 9(d), a corresponding prompt is also displayed on a screen of the mobile terminal. In addition, if there is a front passenger and there is a vehicle or an obstacle on a left side of the parking space, a prompt that reads "the parking space is relatively narrow, and it is recommended that the front passenger get off the vehicle in advance to wait" as shown in (b) in FIG. 7B is displayed on the screen of the vehicle and/or the screen of the mobile terminal, to prompt the front passenger to get off the vehicle in advance, thereby improving parking efficiency. It should be understood that, the foregoing prompt may also be performed by using a voice prompt. To be specific, the vehicle or the mobile terminal may prompt, by using a voice prompt, the user that "a distance between a driver's door and an obstacle is excessively narrow, and it is advised to get off the vehicle and park the vehicle by using the mobile phone" and/or "a parking space is relatively narrow, and it is recommended that the front passenger get off the vehicle in advance and wait", or may prompt, in another manner, for example, a change in an atmosphere light, the user to park the vehicle by using the mobile terminal. This is not limited in this embodiment of this application.

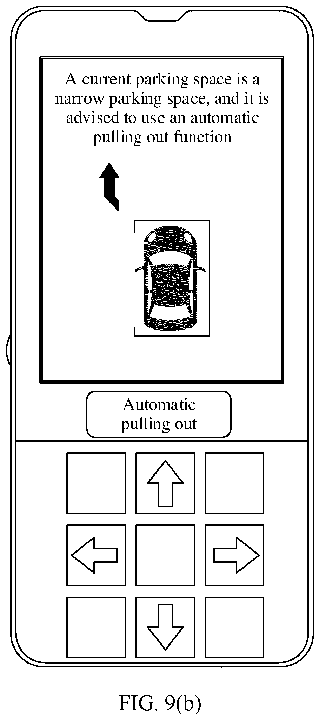

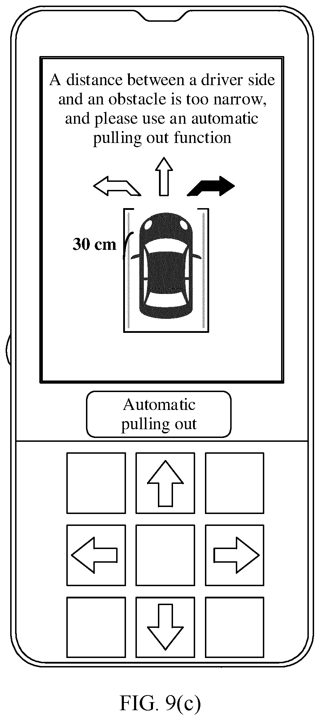

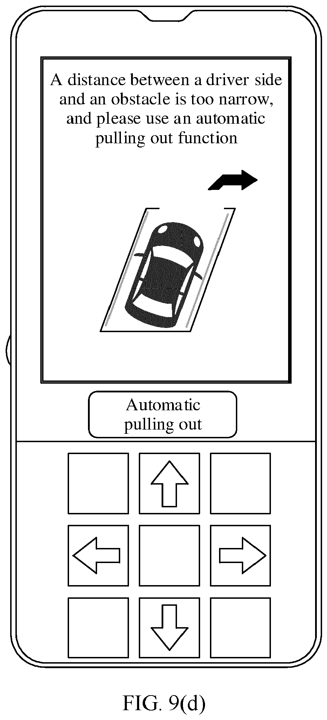

In a possible implementation, when the user prepares to pull the vehicle out of the parking space, the vehicle determines, based on a historical parking record, whether the current parking space is a narrow parking space; and if the current parking space is the narrow parking space, for example, a vertical parking space shown in FIG. 9(a) or a parallel parking space shown in FIG. 9(b), the mobile terminal prompts the user that "the current parking space is a narrow parking space, and it is advised to use an automatic parking function". Optionally, the vehicle may further determine, based on a historical record, whether a first distance between a driver side and an obstacle is less than or equal to A2. If the first distance is less than or equal to A2, the mobile terminal prompts the user that "the distance between the driver side and the obstacle is excessively narrow, and please use the automatic parking function", as shown in FIG. 9(c) and FIG. 9(d). In addition, when the first distance between the driver side of the vehicle and the obstacle is less than or equal to A2, specific distance information between the driver side of the vehicle and the obstacle may be displayed on an interface of the mobile terminal, as shown in FIG. 9(c). It should be understood that, in this case, when the user is far away from the vehicle, the user may control the vehicle to automatically pull out by using the mobile terminal, and the user does not need to arrive at the vehicle to determine whether the vehicle door can be opened to a width that the user can get on the vehicle. This can save time and improve user experience. It should be understood that, in this case, corresponding content may also be displayed on the in-vehicle screen of the vehicle. If the first distance is less than or equal to A2, and the user is on the driver side, the user may choose to automatically pull the vehicle out by using a function on the in-vehicle screen, or may manually pull the vehicle out.

It should be further noted that, the vehicle may determine whether the parking space is a narrow parking space and whether the first distance is less than or equal to A2 based on a historical parking record. In some cases, the vehicle may also collect real-time information of a surrounding environment, determine, based on the real-time information of the surrounding environment, a location of the vehicle in the parking space, and determine whether the first distance is less than or equal to A2. This is not limited in embodiments of this application.

Specifically, as shown in FIG. 8A to FIG. 8C, after receiving the prompt, the user gets off the vehicle and taps an "automatic parking in" button on the mobile terminal, to automatically park the vehicle in the target parking space. Optionally, when the vehicle pulls out, the user taps an "automatic pulling out" button shown in FIG. 9(a) to FIG. 9(d) to pull the vehicle out of the parking space.

It should be understood that, the user may tap the "automatic parking in" or "automatic pulling out" button on the mobile terminal. After the vehicle receives a parking in or pulling out prompt from the mobile terminal, the vehicle is parked in the target parking space or pulls out of the parking space according to the automatic parking policy in FIG. 5. Alternatively, the user may manually control the vehicle to move by using a movement direction control button (for example, the "↑ ", "↓", "←", or "→" button in FIG. 8A to FIG. 8C and FIG. 9(a) to FIG. 9(d)) on the mobile terminal, so that the vehicle is parked in the target parking space or pulls out of the target parking space.

According to the automatic parking method provided in this embodiment of this application, the target parking space is identified, so that the target parking space can be determined as the narrow parking space in advance, and different parking policies can be formulated in advance according to a size of the narrow parking space and a size of the vehicle. When the user selects automatic parking, the vehicle may be parked in or pull out according to the parking policy. When the target parking space is excessively narrow, and the vehicle determines that it is inconvenient for the user to get off after parking, the vehicle and/or the mobile terminal prompt/prompts the user to control automatic parking by using the mobile terminal, so that a case in which the user finds that the user cannot get off the vehicle after parking in the target parking space can be effectively avoided. Alternatively, when the target parking space is excessively narrow, and the vehicle determines that the user cannot get on the vehicle to pull the vehicle out, the user may be prompted by using the mobile terminal to control, by using the mobile terminal, the vehicle to automatically pull out when the user is relatively far away from the vehicle, to help save time and improve user experience.

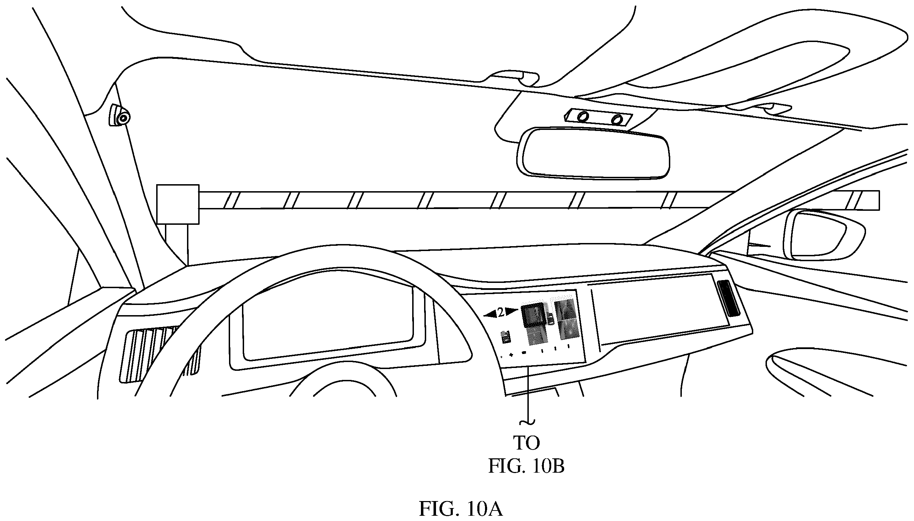

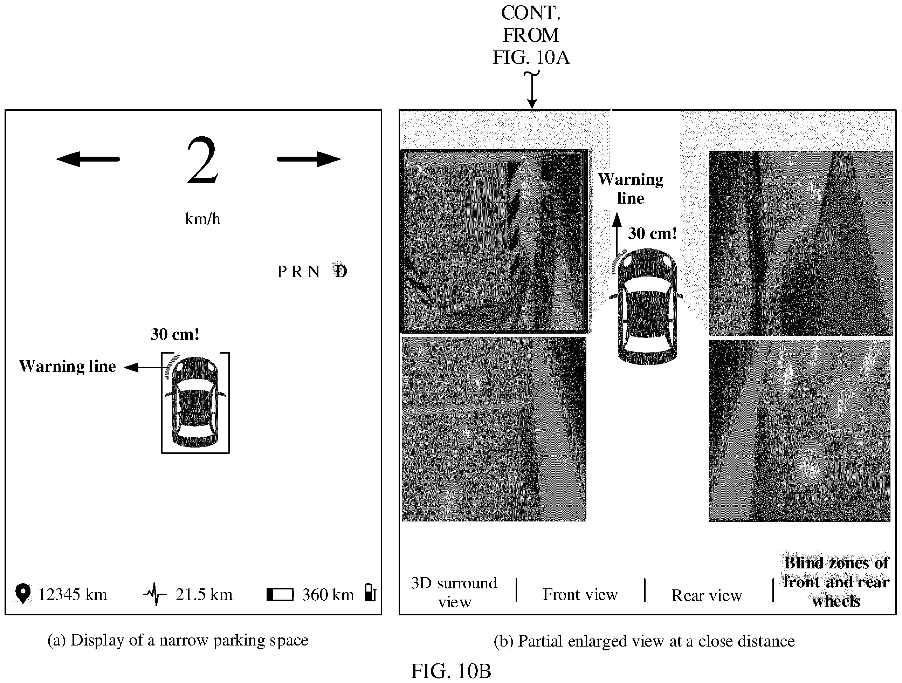

In a possible implementation, during the parking, when a distance between any position of the exterior contour of the vehicle and the target parking space or the obstacle is less than or equal to A4, specific distance information between the exterior contour of the vehicle and the surrounding obstacle may be displayed on the in-vehicle screen of the vehicle, and a warning line may be prompted, as shown in FIG. 10A and FIG. 10B. When there is no obstacle around the vehicle, information about a shortest distance between the exterior contour of the vehicle and an inner boundary of the parking space line may be displayed (or not displayed when the shortest distance is greater than A4). Optionally, as shown in (b) in FIG. 10B, a partial enlarged view in which the vehicle is away from an edge of the narrow parking space and the obstacle during the parking may be further displayed on the in-vehicle screen, so that the user can perceive an actual situation in real time, and adjust a parking direction.

In a possible implementation, when the user is outside the vehicle, the user controls, by using the mobile terminal, the vehicle to be parked in or pull out of the target parking space. In this case, when the distance between any position of the exterior contour of the vehicle and the target parking space or the obstacle is less than A4, the partial enlarged view in which the vehicle is away from the edge of the narrow parking space and the obstacle shown in (b) in FIG. 10B may synchronously be displayed on the mobile terminal, so that the user can perceive an actual situation in real time, and adjust a parking direction.

It should be understood that, A4 may be a minimum safe distance that is used to ensure that the vehicle does not scratch a surrounding obstacle during the parking, or may be another value. A4 may be set based on a vehicle model and a type of the target parking space, or may be set by the user. This is not limited in this embodiment of this application.

According to the automatic parking method provided in this embodiment of this application, when the distance between any location of the exterior contour of the vehicle and the parking space line of the target parking space or the obstacle around the target parking space is excessively small, specific distance information is displayed. During the parking, the partial enlarged view in which the vehicle is away from the edge of the narrow parking space and the obstacle is displayed, so that the user can perceive an actual situation in real time and adjust the parking direction, thereby improving user experience.

It should be understood that, shapes of the vehicle, the mobile terminal, and the parking space shown in FIG. 3 to FIG. 10A and FIG. 10B, and display content on the screens of the vehicle and the mobile terminal are merely examples for description, and should not be construed as a limitation on this embodiment of this application.

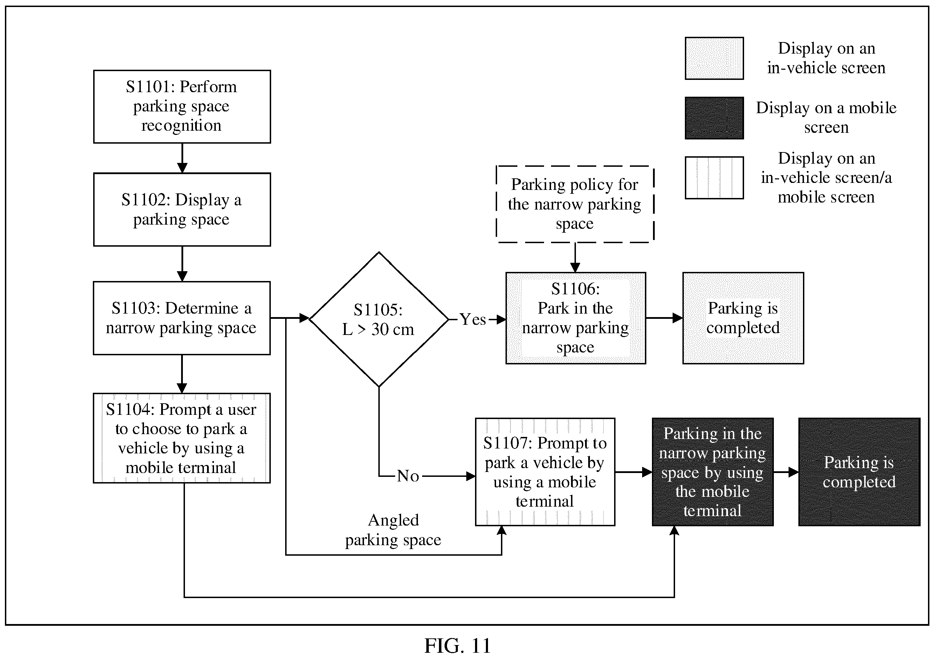

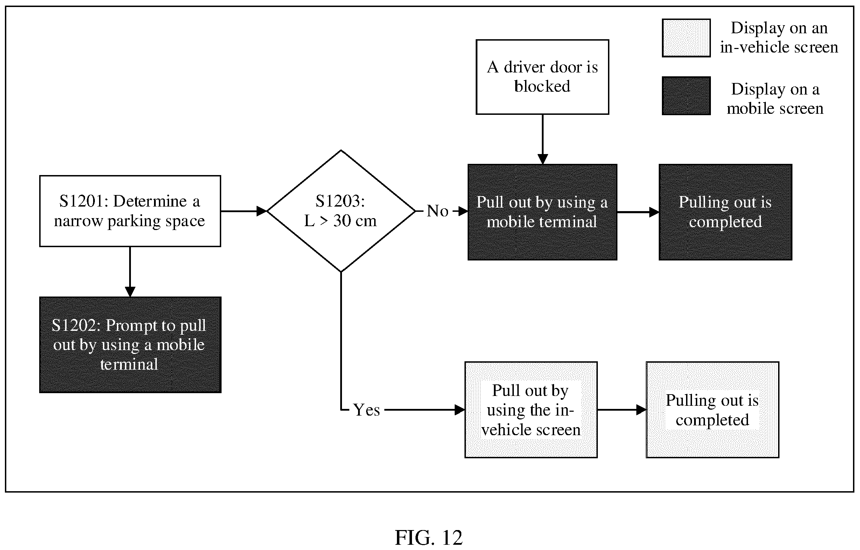

With reference to FIG. 3 to FIG. 10A and FIG. 10B, the foregoing describes specific solutions of the automatic parking method provided in embodiments of this application. With reference to FIG. 11 and FIG. 12, the following describes in detail procedures of the automatic parking method shown in FIG. 3 to FIG. 10A and FIG. 10B in a specific application scenario.

FIG. 11 is a schematic flowchart of an automatic parking method according to an embodiment of this application. Specifically, FIG. 11 shows a specific interaction process between a user and a vehicle, between a user and a mobile terminal, and between a mobile terminal and a vehicle during parking. As shown in FIG. 11, when the vehicle is searching for a parking space to be parked, a specific procedure is as follows.

S1101: The vehicle performs parking space recognition.

It should be understood that, for a process in which the vehicle performs parking space identification, refer to the descriptions in the foregoing embodiment. Details are not described herein again.

S1102: The vehicle displays parking spaces.

It should be understood that, after the vehicle completes parking space recognition, or in a parking space recognition process, each recognized parking space may be separately compared with a standard parking space, to determine which parking space is a narrow parking space or a standard parking space. For a specific determining process, refer to the description in the foregoing embodiment. Details are not described herein again.

After the foregoing determining process is completed, the recognized narrow parking space and standard parking space are displayed on the in-vehicle screen of the vehicle, as shown in (a) in FIG. 4B.

Optionally, the user selects the target parking space based on the parking spaces displayed on the in-vehicle screen, and when the user selects a narrow parking space as the target parking space, S1103 is performed.

S1103: The vehicle determines that the parking space selected by the user is a narrow parking space.

Specifically, as shown in (b) in FIG. 4B, after determining, based on the selection of the user, the target parking space as the narrow parking space, the vehicle prompts the user by using a prompt that is on the in-vehicle screen and that reads "the target parking space is a narrow parking space, and it is advised to park by using a mobile phone". After receiving the prompt, the user may get off the vehicle and park the vehicle by using the mobile terminal, that is, park the vehicle following S1104 and subsequent steps. Alternatively, the user may ignore the prompt, and the vehicle continues to perform S1105.

S1104: The mobile terminal and/or the vehicle prompt/prompts the user to control, by using the mobile terminal, the vehicle to be parked in the target parking space.

Optionally, after receiving the prompt, the user may get off the vehicle and control, by using the mobile terminal, the vehicle to be parked in the target parking space.

S1105: The vehicle determines whether L is greater than a preset value.

For example, the preset value may also be 30 cm.

In a possible implementation, the vehicle first determines a type of the narrow parking space. When the narrow parking space is an "angled parking space", the vehicle displays, on the in-vehicle screen and the screen of the mobile terminal, a prompt to the user, indicating that "the target parking space is an angled parking space, and it is advised to park the vehicle by using a mobile phone".

In a possible implementation, the vehicle formulates a parking policy according to a size and a type of the target parking space. For a specific procedure and method for formulating the parking policy, refer to the descriptions in the foregoing embodiments. Details are not described herein again. The vehicle enables the pre-parking location to meet, according to the parking policy, that the distance between the front passenger side and the obstacle is greater than the minimum safe parking distance, and the distance between the driver side and the obstacle is greater than the distance between the front passenger side and the obstacle. Under the foregoing premise, it is determined whether L is greater than a preset value. When L is greater than the preset value, S1106 is performed. When L is less than or equal to the preset value, S1107 is performed.

It should be understood that, in FIG. 11, "L" represents a distance between the driver side and the obstacle, and "30 cm" represents a minimum distance between the exterior contour of the driver side of the vehicle and the obstacle when the user is allowed to get off the vehicle after the vehicle door is opened and does not scratch the obstacle. The distance may be set according to another actual situation, for example, may be set according to a vehicle model.

S1106: The in-vehicle screen prompts that the current parking space is a narrow parking space, and the vehicle is controlled, according to the parking policy formulated in S1105, to be parked in the target parking space.

S1107: Both the in-vehicle screen and the screen of the mobile terminal prompt the user to get off the vehicle in advance and park the vehicle by using the mobile terminal. After the user gets off the vehicle, the user controls the vehicle to be parked in the target parking space by using the mobile terminal.

According to the automatic parking method provided in this embodiment of this application, the vehicle identifies, determines, and displays the parking space. When the user selects a narrow parking space as the target parking space based on a display of the vehicle, the vehicle can determine the target parking space as the narrow parking space in advance, and prompt the user to park the vehicle by using the mobile terminal. In addition, different parking policies can be formulated based on the size of the narrow parking space. When the user selects automatic parking, the vehicle may park the vehicle in the target parking space according to the parking policy. When the target parking space is excessively narrow and it is inconvenient for the user to get off the vehicle after parking, the vehicle and/or the mobile terminal prompt/prompts the user to control automatic parking by using the mobile terminal, so that a case in which the user finds that the user cannot get off the vehicle after parking in the target parking space can be effectively avoided, to help save time and improve user experience.

FIG. 12 is a schematic flowchart of an automatic parking method according to an embodiment of this application. Specifically, FIG. 12 shows a specific interaction process between a user and a vehicle, between a user and a mobile terminal, and between a mobile terminal and a vehicle during parking. As shown in FIG. 12, when the user prepares to pull the vehicle out of the parking space, a specific procedure is as follows.

S1201: The vehicle determines a narrow parking space.

Optionally, when the user prepares to pull the vehicle out of the parking space, if the user is relatively far away from the vehicle, the user may send a parking preparation indication to the vehicle by using the mobile terminal, and the vehicle enables the data module, the perception module, and the control module in FIG. 2 according to the parking preparation indication.

Further, the vehicle determines, according to a parking record stored in the data module or environment information obtained by the perception module, that the parking space is a narrow parking space. For a specific method, refer to the description in the foregoing embodiment. Details are not described herein again.

It should be understood that, the parking preparation indication may be a request message that is sent by the mobile terminal to the vehicle and that is used to indicate the vehicle to obtain a type of the target parking space and/or a relative parking space location of the vehicle, or may be another message that can indicate the vehicle to obtain a type of the target parking space and/or a relative parking space location of the vehicle. This is not limited in this embodiment of this application.

It should be noted that the distance at which the user controls the mobile terminal to send the parking preparation indication to the vehicle may be a distance that can ensure smooth communication between the mobile terminal and the vehicle. The distance may be a preset value or range, for example, 0 to 100 m, or may be another value. This is not limited in this embodiment of this application.

S1202: The mobile terminal prompts the user to pull the vehicle out by using the mobile terminal.

After determining that the parking space is the narrow parking space, the vehicle may control the mobile terminal to prompt the user that "the parking space is a narrow parking space, and it is advised to park the vehicle by using the mobile terminal". After receiving the prompt, the user may choose to pull the vehicle out by using the mobile terminal. Optionally, the user may alternatively ignore the prompt.

S1203: The vehicle determines whether L is greater than a preset value.

After determining that the parking space is the narrow parking space, the vehicle determines whether L is greater than a preset value. For example, the preset value may be 30 cm.

When L is less than or equal to the preset value, the mobile terminal prompts the user that "the distance between the driver side and the obstacle is excessively narrow, please use the automatic parking function". When L is greater than the preset value, the user may control the vehicle to pull out of the parking space by using in-vehicle screen, or may control the vehicle to pull out of the parking space by using the mobile terminal.

It should be understood that, in FIG. 12, "L" represents a distance between the driver side and the obstacle, and "30 cm" represents a minimum distance between the exterior contour of the driver side of the vehicle and the obstacle when the user is allowed to get off the vehicle after the vehicle door is opened and does not scratch the obstacle. The distance may be set according to another actual situation, for example, may be set according to a vehicle model.

It should be understood that, in this embodiment of this application, when the user prepares to pull the vehicle out of the parking space, if the user (driver) is in the vehicle, regardless of a value of L, the vehicle may automatically pull out of the parking space by using the in-vehicle screen. Optionally, the user (driver) is in the vehicle, and regardless of a value of L, the vehicle may automatically pull out of the parking space.

It should be noted that, in this embodiment of this application, for a method for determining, by the vehicle, whether the parking space is a narrow parking space and whether "L > 30 cm" is valid, refer to the descriptions in the foregoing embodiment. Details are not described herein again.

According to the automatic parking method provided in this embodiment of this application, when the parking space in which the vehicle is located is the narrow parking space, or the parking space in which the vehicle is located is excessively narrow, so that the user cannot get on the vehicle and park the vehicle, the vehicle may prompt the user by using the mobile terminal, so that the user can control the vehicle to automatically pull out when the user is far away from the vehicle, that is, the mobile terminal can control the vehicle to automatically pull out, thereby saving time and improving user experience.

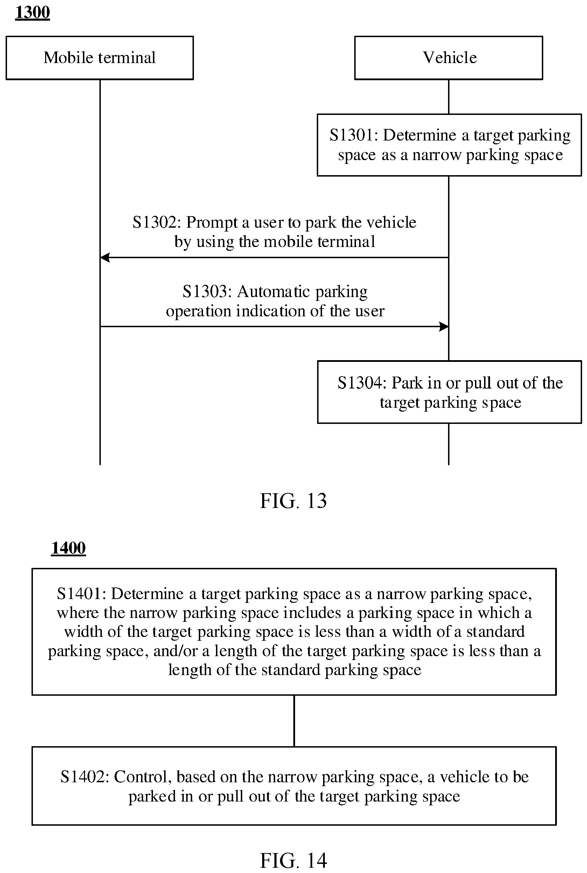

FIG. 13 is a schematic flowchart of an automatic parking method 1300 according to an embodiment of this application. The method 1300 may be applied to the intelligent driving vehicle and the scenario in which automatic parking is supported shown in FIG. 1.

S1301: The vehicle determines the target parking space as a narrow parking space.

It should be understood that, when a width of the target parking space is less than a width of a standard parking space, and/or a length of the target parking space is less than a length of a standard parking space, the target parking space is determined as the narrow parking space.

It should be understood that, for a process in which the vehicle determines the target parking space, refer to the descriptions in the foregoing embodiment. Details are not described herein again.

S1302: The vehicle prompts the user to park the vehicle by using the mobile terminal.

It should be understood that, for a method in which the vehicle prompts the user to park the vehicle by using the mobile terminal, refer to the descriptions in the foregoing embodiment. Details are not described herein again.

S1303: The vehicle receives an automatic parking operation of the user that is detected by a terminal device.

Optionally, the user selects the automatic parking operation according to a prompt of the mobile terminal. After the user selects the automatic parking, the mobile terminal sends an automatic parking operation indication to the vehicle.

It should be understood that, the automatic parking operation may be that the user taps an "automatic parking in" or "automatic pulling out" button on the mobile terminal, or may be that the user taps a movement direction control button (for example, the "↑", "↓", "←", and "→" button in FIG. 8A to FIG. 8C and FIG. 9(a) to FIG. 9(d)) on the mobile terminal to manually control the vehicle to move.

S1304: The vehicle is parked in or pulls out of the target parking space based on the received parking indication of the mobile terminal.

It should be understood that, for a process in which the vehicle is parked according to the received parking indication of the mobile terminal, refer to the descriptions in the foregoing embodiment. Details are not described herein again.

For example, the mobile terminal in this embodiment of this application may be the mobile terminal 200, and the vehicle may be the vehicle 100.

According to the automatic parking method provided in this embodiment of this application, the target parking space is determined as the narrow parking space, the user is prompted in advance of parking by using the mobile terminal, and the vehicle is parked in or pulls out of the parking space according to the automatic parking operation indication sent by the mobile terminal. This can save time and improve user experience.

FIG. 14 is a schematic flowchart of an automatic parking method 1400 according to an embodiment of this application. The method 1400 may be applied to the intelligent driving vehicle and the scenario in which automatic parking is supported shown in FIG. 1.

S1401: Determine a target parking space as a narrow parking space, where the narrow parking space includes a parking space in which a width of the target parking space is less than a width of a standard parking space, and/or a length of the target parking space is less than a length of the standard parking space.

It should be understood that, for a process in which the vehicle determines the target parking space, refer to the descriptions in the foregoing embodiment. Details are not described herein again.

S1402: Control, based on the narrow parking space, a vehicle to be parked in or pull out of the target parking space.

Optionally, after determining the target parking space as the narrow parking space, the vehicle may prompt the user that the target parking space is the narrow parking space. After receiving the prompt, the user may select automatic parking or manual parking. The vehicle is controlled to be parked in or pull out of the target parking space according to a specific automatic parking indication or manual parking indication.

It should be understood that, for a process in which the vehicle is parked according to the parking indication, refer to the description in the foregoing embodiment. Details are not described herein again.

For example, the mobile terminal in this embodiment of this application may be the mobile terminal 200, and the vehicle may be the vehicle 100.

According to the automatic parking method provided in this embodiment of this application, the target parking space is determined as the narrow parking space, so that a parking policy different from that of the standard parking space can be performed. For example, the user is prompted in advance to park the vehicle by using the mobile terminal, or the location of the vehicle after parking in the narrow parking space is determined in advance, thereby improving user experience during automatic parking.

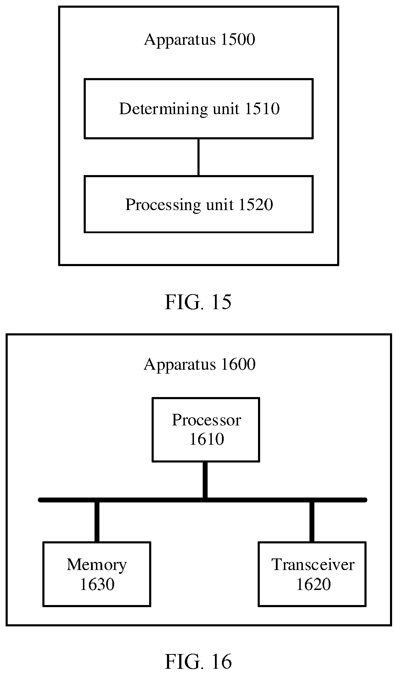

The automatic parking method according to embodiments of this application is described above in detail with reference to FIG. 3 to FIG. 14. With reference to FIG. 15 and FIG. 16, the following describes in detail an automatic parking apparatus according to embodiments of this application. It should be understood that, descriptions of apparatus embodiments correspond to the descriptions of method embodiments. Therefore, for content that is not described in detail, refer to the foregoing method embodiments. For brevity, details are not described herein again.

FIG. 15 is a schematic block diagram of an automatic parking apparatus according to an embodiment of this application. The apparatus 1500 includes a determining unit 1510 and a processing unit 1520. The determining unit 1510 may implement a corresponding communication function, and the processing unit 1520 is configured to process data.

Optionally, the apparatus 1500 may further include a storage unit. The storage unit may be configured to store instructions and/or data. The processing unit 1520 may read the instructions and/or the data in the storage unit, so that the apparatus is enabled to implement the foregoing method embodiment.

The apparatus 1500 may include units configured to perform the methods in FIG. 3 to FIG. 14. In addition, the units in the apparatus 1500 and the foregoing other operations and/or functions are separately used to implement corresponding procedures in the method embodiments in FIG. 3 to FIG. 14.

When the apparatus 1500 is configured to perform the method 1400 in FIG. 14, the determining unit 1510 may be configured to perform S1401 in the method 1400, and the processing unit 1520 may be configured to perform S1402 in the method 1400.

Specifically, the apparatus 1500 includes: the determining unit 1510, configured to determine a target parking space as a narrow parking space, where the narrow parking space includes a parking space in which a width of the target parking space is less than a width of a standard parking space, and/or a length of the target parking space is less than a length of the standard parking space; and the processing unit 1520, configured to control, based on the narrow parking space, a vehicle to be parked in or pull out of the target parking space.

Optionally, the determining unit 1510 is further configured to determine that a difference between the width of the target parking space and a width of the vehicle is less than or equal to a second threshold.

Optionally, the processing unit is further configured to prompt a user to park the vehicle by using a mobile terminal; and that the processing unit controls, based on the narrow parking space, the vehicle to be parked in or pull out of the target parking space includes: making a response to a received first instruction sent by the mobile terminal.

It should be understood that, the first instruction may be an automatic parking instruction sent by the mobile terminal, or an instruction sent by the mobile terminal for controlling the vehicle to move.

Optionally, the determining unit is further configured to: before the processing unit prompts the user to park the vehicle by using the mobile terminal, determine a first distance based on a width of the narrow parking space and the width of the vehicle; and determine that the first distance is less than or equal to a third threshold, where the first distance is a distance between an exterior contour on a driving side of the vehicle and an obstacle that is on the driving side of the vehicle after the vehicle is parked in the target parking space.

Optionally, the determining unit is further configured to: before the determining unit determines the first distance based on the width of the narrow parking space and the width of the vehicle, determine that a second distance is greater than or equal to a fourth threshold and the first distance is greater than or equal to the second distance, where the second distance is a distance between an exterior contour on a front passenger side of the vehicle and an obstacle that is on the front passenger side of the vehicle after the vehicle is parked in the target parking space.

Optionally, the processing unit is further configured to prompt the user that the target parking space is the narrow parking space.

Optionally, the processing unit is further configured to: during parking, when a third distance between a first location of an exterior contour of the vehicle and a first obstacle or a parking space line of the target parking space is less than or equal to a fifth threshold, display information about the third distance, and/or a partial enlarged view of the first location and the first obstacle or the parking space line.

Optionally, the processing unit is further configured to: before the processing unit controls, based on the narrow parking space, the vehicle to be parked in or pull out of the target parking space, when there is the obstacle on the second side of the vehicle, prompt a user on the second side of the vehicle to get off the vehicle in advance.

Optionally, the determining unit is further configured to determine the target parking space as the narrow parking space based on a parking record of the vehicle.

The processing unit in FIG. 15 may be implemented by at least one processor or a processor-related circuit, the determining unit may be implemented by a transceiver or a transceiver-related circuit, and the storage unit may be implemented by using at least one memory.

FIG. 16 is a schematic block diagram of an automatic parking apparatus according to an embodiment of this application. The parking apparatus 1600 shown in FIG. 16 may include a processor 1610, a transceiver 1620, and a memory 1630. The processor 1610, the transceiver 1620, and the memory 1630 are connected through an internal connection path. The memory 1630 is configured to store instructions. The processor 1610 is configured to execute the instructions stored in the memory 1630, and the transceiver 1630 receives or sends some parameters. Optionally, the memory 1630 may be coupled to the processor 1610 through an interface, or may be integrated with the processor 1610.

It should be noted that the transceiver 1620 may include but is not limited to a transceiver apparatus of an input/output interface (input/output interface), to implement communication between the communications device 1600 and another device or a communications network.

During implementation, the steps of the foregoing method may be implemented by using hardware integrated logical circuit in the processor 1610, or by using instructions in a form of software. The method disclosed in embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1630, and the processor 1610 reads information in the memory 1630 and implements the steps of the foregoing method in combination with hardware of the processor 1610. To avoid repetition, details are not described herein again.

It should also be understood that in embodiments of this application, the memory may include a read-only memory and a random access memory, and provide instructions and data to the processor. A part of the processor may further include a non-volatile random access memory. For example, the processor may further store information of a device type.

An embodiment of this application further provides a computer-readable medium. The computer-readable medium stores program code. When the computer program code is run on a computer, the computer is enabled to perform any one of the foregoing methods in FIG. 3 to FIG. 14.

An embodiment of this application further provides a chip, including at least one processor and a memory. The at least one processor is coupled to the memory, and is configured to read and execute instructions in the memory, to perform any one of the foregoing methods in FIG. 3 to FIG. 14.

An embodiment of this application further provides an automatic driving vehicle, including at least one processor and a memory. The at least one processor is coupled to the memory, and is configured to read and execute instructions in the memory, to perform any one of the foregoing methods in FIG. 3 to FIG. 14.

It should be understood that, the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not indicate an execution sequence in various embodiments of this application. The execution sequence of the processes should be determined according to functions and internal logic of the processes, and should not be construed as any limitation on the implementation processes of embodiments of this application.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an obj ect, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that, the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An automatic parking method, comprising:
determining a target parking space as a narrow parking space, wherein the narrow parking space comprises a parking space in which a width of the target parking space is less than a width of a standard parking space, and/or a length of the target parking space is less than a length of the standard parking space; and
controlling, based on the narrow parking space, a vehicle to be parked in or pull out of the target parking space.

2. The method according to claim 1, wherein the method further comprises:
the determining a target parking space as a narrow parking space comprises:
determining that a difference between the width of the target parking space and a width of the vehicle is less than or equal to a second threshold.

3. The method according to claim 1 or 2, wherein the method further comprises:
prompting a user to park the vehicle by using a mobile terminal; and the controlling, based on the narrow parking space, a vehicle to be parked in or pull out of the target parking space comprises:
making a response to a received first instruction sent by the mobile terminal.

4. The method according to claim 3, wherein before the prompting a user to park the vehicle by using a mobile terminal, the method further comprises:
determining a first distance based on a width of the narrow parking space and the width of the vehicle; and
determining that the first distance is less than or equal to a third threshold, wherein the first distance is a distance between an exterior contour on a first side of the vehicle and an obstacle that is on the first side of the vehicle after the vehicle is parked in the target parking space.

5. The method according to claim 4, wherein before the determining a first distance based on a width of the narrow parking space and the width of the vehicle, the method further comprises:
determining that a second distance is greater than or equal to a fourth threshold and the first distance is greater than or equal to the second distance, wherein the second distance is a distance between an exterior contour on a second side of the vehicle and an obstacle that is on the second side of the vehicle after the vehicle is parked in the target parking space.

6. The method according to any one of claims 1 to 5, wherein the method further comprises:
prompting the user that the target parking space is the narrow parking space.

7. The method according to any one of claims 1 to 6, wherein the method further comprises:
during parking, when a third distance between a first location of an exterior contour of the vehicle and a first obstacle or a parking space line of the target parking space is less than or equal to a fifth threshold, displaying information about the third distance, and/or a partial enlarged view of the first location and the first obstacle or the parking space line.

8. The method according to any one of claims 1 to 7, wherein before the controlling, based on the narrow parking space, a vehicle to be parked in or pull out of the target parking space, the method further comprises:
when there is the obstacle on the second side of the vehicle, prompting a user on the second side of the vehicle to get off the vehicle in advance.

9. The method according to any one of claims 1 to 8, wherein the determining a target parking space as a narrow parking space comprises:
determining the target parking space as the narrow parking space based on a parking record of the vehicle.

10. An automatic parking apparatus, comprising:
a determining unit, configured to determine a target parking space as a narrow parking space, wherein the narrow parking space comprises a parking space in which a width of the target parking space is less than a width of a standard parking space, and/or a length of the target parking space is less than a length of the standard parking space; and
a processing unit, configured to control, based on the narrow parking space, a vehicle to be parked in or pull out of the target parking space.

11. The apparatus according to claim 10, wherein the determining unit is further configured to:
determine that a difference between the width of the target parking space and a width of the vehicle is less than or equal to a second threshold.

12. The apparatus according to claim 10 or 11, wherein the processing unit is further configured to:
prompt a user to park the vehicle by using a mobile terminal; and that the processing unit controls, based on the narrow parking space, the vehicle to be parked in or pull out of the target parking space comprises:
making a response to a received first instruction sent by the mobile terminal.

13. The apparatus according to claim 12, wherein the determining unit is further configured to:
before prompting the user to park the vehicle by using the mobile terminal, determine a first distance based on a width of the narrow parking space and the width of the vehicle; and
determine that the first distance is less than or equal to a third threshold, wherein the first distance is a distance between an exterior contour on a first side of the vehicle and an obstacle that is on the first side of the vehicle after the vehicle is parked in the target parking space.

14. The apparatus according to claim 13, wherein the determining unit is further configured to:
before determining the first distance based on the width of the narrow parking space and the width of the vehicle,
determine that a second distance is greater than or equal to a fourth threshold and the first distance is greater than or equal to the second distance, wherein the second distance is a distance between an exterior contour on a second side of the vehicle and an obstacle that is on the second side of the vehicle after the vehicle is parked in the target parking space.

15. The apparatus according to any one of claims 10 to 14, wherein the processing unit is further configured to:
prompt the user that the target parking space is the narrow parking space.

16. The apparatus according to any one of claims 10 to 15, wherein the processing unit is further configured to:
during parking, when a third distance between a first location of an exterior contour of the vehicle and a first obstacle or a parking space line of the target parking space is less than or equal to a fifth threshold, display information about the third distance, and/or a partial enlarged view of the first location and the first obstacle or the parking space line.

17. The apparatus according to any one of claims 10 to 16, wherein the processing unit is further configured to:
before the processing unit controls, based on the narrow parking space, the vehicle to be parked in or pull out of the target parking space, when there is the obstacle on the second side of the vehicle, prompt a user on the second side of the vehicle to get off the vehicle in advance.

18. The apparatus according to any one of claims 10 to 17, wherein the determining unit is further configured to:
determine the target parking space as the narrow parking space based on a parking record of the vehicle.

19. An automatic parking apparatus, comprising:
a transceiver, configured to receive and send a message;
a memory, configured to store a computer program; and
a processor, configured to execute the computer program stored in the memory, so that the apparatus performs the method according to any one of claims 1 to 9, and the processor is coupled to the memory.

20. An automatic driving vehicle, comprising the apparatus according to any one of claims 10 to 18.

21. A computer-readable storage medium, wherein the computer-readable storage medium stores a computer program, and when the computer program is executed by a computer, the method according to any one of claims 1 to 9 is implemented.

22. A chip, wherein the chip comprises a processor and a data interface, and the processor reads instructions stored in a memory through the data interface, to perform the method according to any one of claims 1 to 9.
